# EUROPÄISCHE PATENTSCHRIFT

(11) **EP 1 990 118 B1**
(45) Veröffentlichungstag und Bekanntmachung des Hinweises auf die Patenterteilung: **06.07.2011**
(21) Anmeldenummer: 08400029.8
(22) Anmeldetag: 07.05.2008
(51) Int. Cl.: B23D 47/02, B27B 5/065

(54) **Plattenbearbeitungsanlage für grossformatige Platten oder Plattenstapel, insbesondere Plattenaufteilsäge**
Board processing device for large-scale boards or piles of boards, in particular board separation saw
Installation de traitement de plaques pour plaques ou pile de plaques de grand format, en particulier scie à panneaux

(30) Priorität: 08.05.2007 DE 102007022057
(43) Veröffentlichungstag der Anmeldung: 12.11.2008
(73) Patentinhaber: HOLZMA Plattenaufteiltechnik GmbH, 75365 Calw-Holzbronn (DE)
(72) Erfinder: Gröning, Peter, 75392 Deckenpfronn (DE); Hartmann, Gerhard, 72224 Ebhausen-Rotfelden (DE)
(74) Vertreter: Knapp, Thomas

(56) Entgegenhaltungen:
- EP-A- 0 911 105
- EP-A- 1 361 029
- WO-A-02/26452
- AT-B- 410 913
- DE-A1- 19 801 183

## Beschreibung

### Stand der Technik

Die Erfindung betrifft eine Plattenbearbeitungsanlage, insbesondere eine Plattenaufteilsäge, nach dem Oberbegriff des Anspruchs 1. Eine solche Plattenbearbeitungsanlage ist der DE 198 01 183 zu entnehmen.

Aus der AT 410 913 B ist eine Plattenaufteilsäge bekannt, die einen Auflagetisch umfasst, der mittels einer komplexen Kinematik von einer zu einem Maschinenträger parallelen Längsstellung in eine zu dem Maschinenträger insgesamt in etwa orthogonale Querstellung verschwenkt werden kann. Eine Schwenkachse ist in der Längsstellung des Auflagetisches an dem direkt an einem Winkellineal angeordneten Ende des Auflagetisches angeordnet. In der Querstellung des Auflagetisches kann dieser parallel zum Maschinenträger verfahren werden. Bei der bekannten Anlage steht eine Bedienperson nach dem Verschwenken des Auflagetisches zunächst "außerhalb" der Anlage und muss dann im weiteren Verlauf der Bearbeitung um den Auflagetisch herum auf dessen andere Seite laufen oder bei bestimmten Schnittbildern sogar auf den Tisch steigen. Hierdurch geht Zeit verloren, die Rentabilität dieser Anlage ist daher vergleichsweise gering.

Dieser Nachteil wird bei der DE 198 01 183 dadurch überwunden, dass die Schwenkachse in der Längsstellung des Auflagetisches an dessen vom Führungsbereich entfernt angeordnetem Ende liegt. Die Bedienperson kann auf diese Weise immer "innerhalb" der Anlage verbleiben.

### Offenbarung der Erfindung

Die vorliegende Erfindung hat die Aufgabe, eine Plattenbearbeitungsanlage zu schaffen, die nochmals effizienter arbeitet.

Diese Aufgabe wird durch eine Plattenbearbeitungsanlage mit den Merkmalen des Anspruchs 1 gelöst. Vorteilhafte Weiterbildungen der Erfindung sind in Unteransprüchen angegeben.

Auch bei der erfindungsgemäßen Plattenbearbeitungsanlage kann die Bedienperson, unabhängig davon, ob sich der Auflagetisch in der Längsstellung oder der Querstellung befindet, "innerhalb" der Anlage verbleiben, sie wird durch die Schwenkbewegung des Auflagetisches nicht nach außen "abgedrängt". Zusätzlich jedoch wird durch die Verschiebbarkeit des Auflagetisches parallel zum Maschinenträger erreicht, dass nach einem Verschwenken des Auflagetisches die Bedienperson jenes Plattenstück als erstes einem weiteren Bearbeitungsschritt zuführen kann, welches auch bei dem vorhergehenden Bearbeitungsschritt als erstes bearbeitet worden war, und dies ohne dass die Bedienperson um den Auflagetisch herumgehen muss und ohne ein zusätzliches Bewegen und Positionieren des Werkstücks parallel zur Sägelinie. Erfindungsgemäß wird also ein "first-in-first-out-Prinzip" realisiert, was auch die Bearbeitung komplexer Schnittmuster mit hoher Präzision und wirtschaftlicher Effizienz gestattet.

Das gleichzeitige Schwenken und Verfahren spart dabei Zeit, was die Taktrate erhöht.

Bei einer ersten vorteilhaften Weiterbildung der erfindungsgemäßen Plattenbearbeitungsanlage wird vorgeschlagen, dass der Auflagetisch in seiner Querstellung so verfahren werden kann, dass ein Werkstück relativ zum Führungsbereich positioniert wird. Damit entfällt die Notwendigkeit für die Bedienperson, manuell und unter hohem Kraftaufwand das Werkstück relativ zum Führungsbereich zu positionieren. Die Effizienz der Anlage wird hierdurch nochmals erhöht und die Belastung bzw. Ermüdung der Bedienperson reduziert.

In die gleiche Richtung zielt jene Weiterbildung, bei der der Auflagetisch eine Transporteinrichtung umfasst, die Mittel umfasst, mit denen ein auf dem Auflagetisch liegendes Werkstück quer zur Zuführrichtung bewegt werden kann, und/oder dass der Auflagetisch eine Transporteinrichtung umfasst, die Mittel umfasst, mit denen das auf dem Auflagetisch liegende Werkstück parallel zur Zuführrichtung bewegt werden kann. Denkbar als Transporteinrichtung sind beispielsweise angetriebene Rollen, Bänder oder Riemen oder absenkbare Klinken bzw. Schieber.

Der in Längsstellung des Auflagetisches vom Maschinenträger entfernt liegende Längsrand des Auflagetisches kann mindestens eine von einer Bedienperson begehbare Nische umfassen. Damit können auch relativ weit von dem besagten Längsrand entfernt liegende Werkstücke von der Bedienperson auf einfache Art und Weise manuell gehandhabt werden. Außerdem kann der erste anfallende Abfallstreifen manuell entnommen werden.

In Weiterbildung hierzu wird vorgeschlagen, dass der Auflagetisch ein Verschlusselement umfasst, welches die Nische nach oben hin verschließen kann. Damit wird, wenn dies erforderlich ist, eine vollflächig geschlossene Auflagefläche am Auflagetisch geschaffen, so dass auch vergleichsweise kleine Werkstücke problemlos auf dem Auflagetisch abgelegt werden können.

Eine einfache Realisierung eines solchen Verschlusselements besteht darin, dass dieses von einer horizontalen Verschlussposition in eine vertikale Freigabeposition verschwenkbar ist, vorzugsweise automatisiert über eine elektronische oder kombinierte elektronische und pneumatische Steuer- und Regeleinrichtung der Plattenbearbeitungsanlage. Auch dies trägt zur Effizienzsteigerung der Plattenbearbeitungsanlage bei.

Dabei ist es vorteilhaft, wenn die Plattenbearbeitungsanlage eine Sicherheitseinrichtung umfasst, welche das Verschlusselement in der Verschlussposition sperrt, wenn sich ein Werkstück oberhalb der Nische befindet. Damit wird verhindert, dass durch ein Öffnen der Nische die für ein Werkstück notwendige Unterstützung verloren geht und dieses hierdurch beschädigt wird.

Der Auflagetisch ist vorteilhaft als Luftkissentisch ausgebildet, da hierdurch die manuelle Handhabung der auf dem Auflagetisch abgelegten Werkstücke deutlich erleichtert wird.

Eine andere Weiterbildung der Plattenbearbeitungseinrichtung zielt darauf ab, dass die Schwenkachse an einem Fahrwagen angeordnet ist, der mittels mindestens einer Linearführung am Maschinenträger geführt ist. Dies ist eine preiswerte und robuste Realisierung der erfindungsgemäßen Verfahrbarkeit der Schwenkachse des Auflagetisches.

Vorgeschlagen wird auch, dass die Plattenbearbeitungsanlage eine Verriegelungseinrichtung umfasst, die den Auflagetisch in der Längsstellung und/oder der Querstellung verriegelt. Dies kommt der Präzision der Bearbeitung der plattenförmigen Werkstücke zugute, da durch die Verriegelung verhindert wird, dass sich der Auflagetisch ungewollt verschwenkt oder bewegt, während gerade ein Werkstück bearbeitet wird.

Möglich ist auch, dass die Plattenbearbeitungsanlage mindestens einen zusätzlichen Auflagetisch umfasst, der parallel zum Maschinenträger bewegbar ist. Damit kann an derselben Plattenbearbeitungsanlage parallel zueinander mit unterschiedlichen Werkstücken gearbeitet werden.

Zu einer komfortabler ausgestalteten Ausführungsform der Plattenbearbeitungsanlage wird vorgeschlagen, dass die Mittel eine Mehrzahl von Förderriemen umfassen, wobei ein Teil der Förderriemen orthogonal zu den übrigen Förderriemen verlaufen. Die Förderriemen verlaufen in einem Bereich einer Oberfläche des Auflagetisches. Durch die Förderriemen wird das Werkstück nach der Bearbeitung durch die Plattenbearbeitungsanlage automatisch weiterbefördert, oder vor einer Bearbeitung wieder zurückgefördert, ohne dass die Bedienperson eingreifen muss, oder zumindest ohne dass die Bedienperson erhebliche Kraft aufwenden muss. Hierdurch wird die Effizienz der Anlage nochmals erhöht und die Belastung der Bedienperson weiter reduziert.

Dabei ist es besonders vorteilhaft, wenn ein Teil der Förderriemen relativ zu den anderen höhenverstellbar sind. So kann bspw. bei einem Längsbetrieb des Auflagetisches die quer zur Sägelinie arbeitende Transporteinrichtung abgesenkt werden, damit die längs zur Sägelinie arbeitende Transporteinrichtung wirkungsvoll arbeiten und das Werkstück transportieren kann. Andererseits kann bei einem Querbetrieb des Auflagetisches die quer zur Sägelinie arbeitende Transporteinrichtung angehoben werden, so dass diese die längs zur Sägelinie arbeitende Transporteinrichtung überragt und ihrerseits das Werkstück transportiert.

### Kurze Beschreibung der Zeichnungen

Nachfolgend werden Ausführungsformen der Erfindung unter Bezugnahme auf die beiliegende Zeichnung näher erläutert. In der Zeichnung zeigen:
- Figur 1: eine schematische Draufsicht auf eine erste Ausführungsform einer Plattenbearbeitungseinrichtung in einem ersten Betriebszustand;
- Figur 2: eine Darstellung ähnlich Figur 1 der Plattenbearbeitungseinrichtung in einem zweiten Betriebszustand;
- Figur 3: eine Darstellung ähnlich Figur 1 der Plattenbearbeitungseinrichtung in einem dritten Betriebszustand;
- Figur 4: eine Darstellung ähnlich Figur 1 der Plattenbearbeitungseinrichtung in einem vierten Betriebszustand;
- Figur 5: eine schematische Draufsicht auf eine zweite Ausführungsform einer Plattenbearbeitungseinrichtung mit einer Darstellung des Funktionsprinzips im ersten Betriebszustand; und
- Figur 6: eine schematische Draufsicht auf die Plattenbearbeitungseinrichtung von Figur 5 mit der Darstellung des Funktionsprinzips im vierten Betriebszustand.

### Beschreibung der Ausführungsform

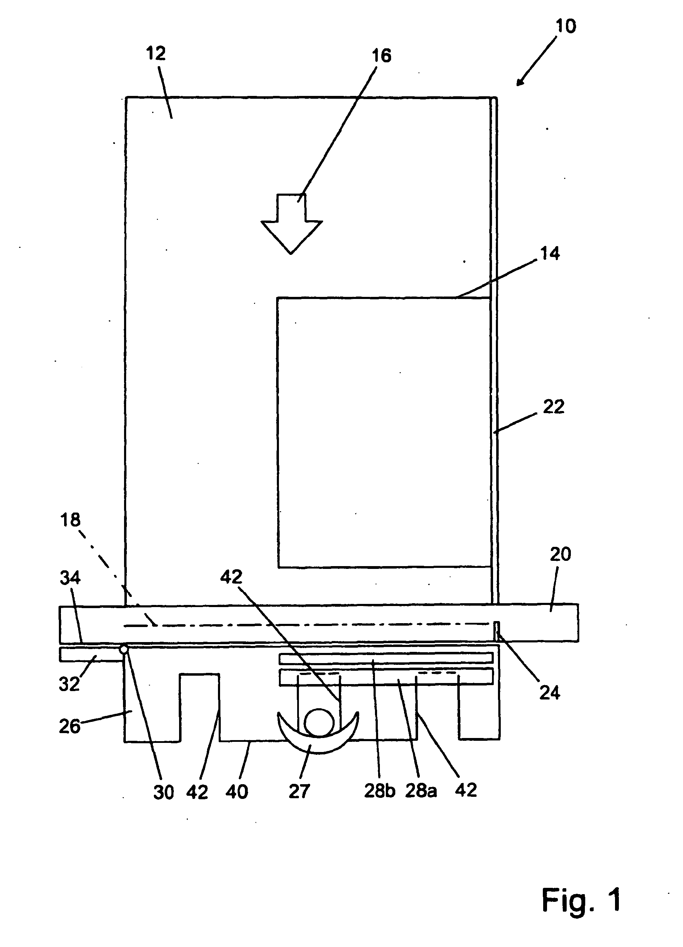

Eine Plattenbearbeitungsanlage trägt in Figur 1 insgesamt das Bezugszeichen 10. Sie ist in der vorliegend gezeigten ersten Ausführungsform als Plattenaufteilsäge ausgebildet und umfasst einen Zuführtisch 12, auf dem ein Stapel 14 plattenförmiger Werkstücke liegt. Der Stapel 14 kann mittels einer nicht gezeigten Vorschubeinrichtung in Zuführrichtung 16 einer Säge zugeführt werden, die ebenfalls nicht dargestellt ist. Eine Säge- oder Schnittlinie ist in Figur 1 jedoch durch eine strichpunktierte Linie mit dem Bezugszeichen 18 angedeutet.

Die Säge und die Sägelinie 18 sind in einen quer zur Zuführrichtung 16 angeordneten länglichen und balkenartigen Maschinenträger 20 integriert. Am in Figur 1 rechten Rand des Zuführtisches 12 ist ein langgestreckter Führungsbereich in Form eines ersten Winkellineals 22 angeordnet. In Verlängerung dieses ersten Winkellineals 22 ist am Maschinenträger 20 ein weiterer Führungsbereich in Form eines kurzen zweiten Winkellineals 24 angeordnet.

Auf der vom Zuführtisch 12 abgewandten Seite des Maschinenträgers 20 ist ein Auflagetisch 26 angeordnet, der die gleiche Breite wie der Zuführtisch 12, jedoch eine deutlich geringere Tiefe aufweist, der also ebenfalls eine längliche Grundform hat. In der Oberfläche des Auflagetisches 26 ist eine Vielzahl von Luftaustrittsdüsen (nicht dargestellt) vorhanden, durch die der Auflagetisch zu einem "Luftkissentisch" wird, da durch die aus den Luftdüsen ausströmende Luft ein auf dem Auflagetisch 26 liegendes plattenförmiges Werkstück auf einem Liftkissen liegt und damit mit besonders geringer Kraft von einer Bedienperson 27 bewegt werden kann. Beispiele für zwei solche Werkstücke, die mittels der Säge von dem Stapel 14 abgetrennt worden sind und nun auf dem Auflagetisch liegen, sind in Figur 1 mit 28a und 28b bezeichnet. Das Werkstück 28a wurde als erstes abgetrennt, das Werkstück 28b danach. Es versteht sich, dass lediglich zur Vereinfachung zwei Werkstücke dargestellt sind. In der Realität können natürlich auch deutlich mehr als zwei Werkstücke abgesägt und auf dem Auflagetisch 26 abgelegt werden. Ferner versteht es sich, dass das Werkstück 28a bei der gezeigten Ausführungsform mit seiner der Bedienperson 27 zugewandten Kante mit dem Rand des Auflagetisches 26 bündig dargestellt ist. In der Realität kann diese Kante aber auch von dem Rand beabstandet sein.

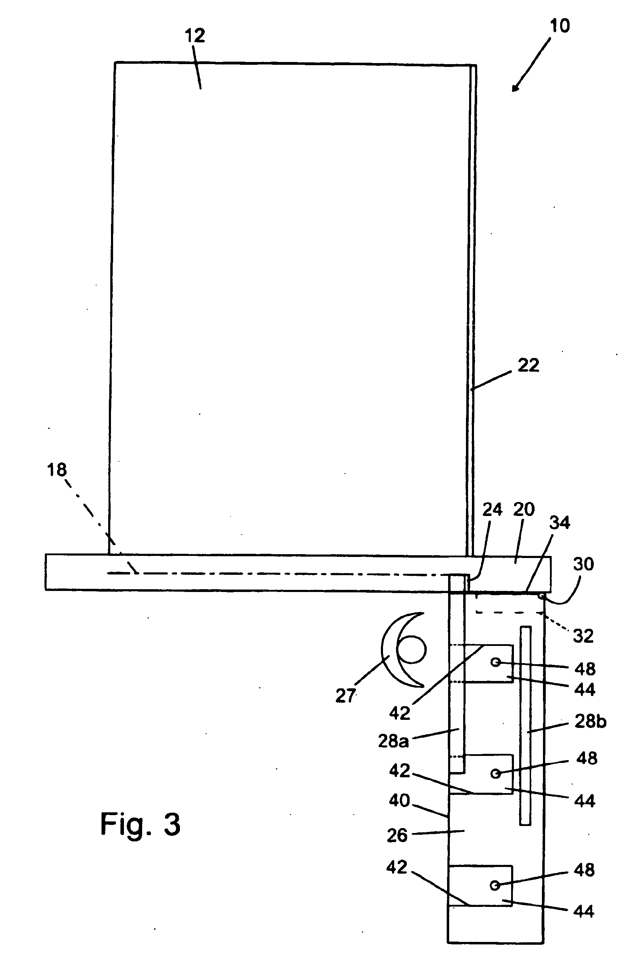

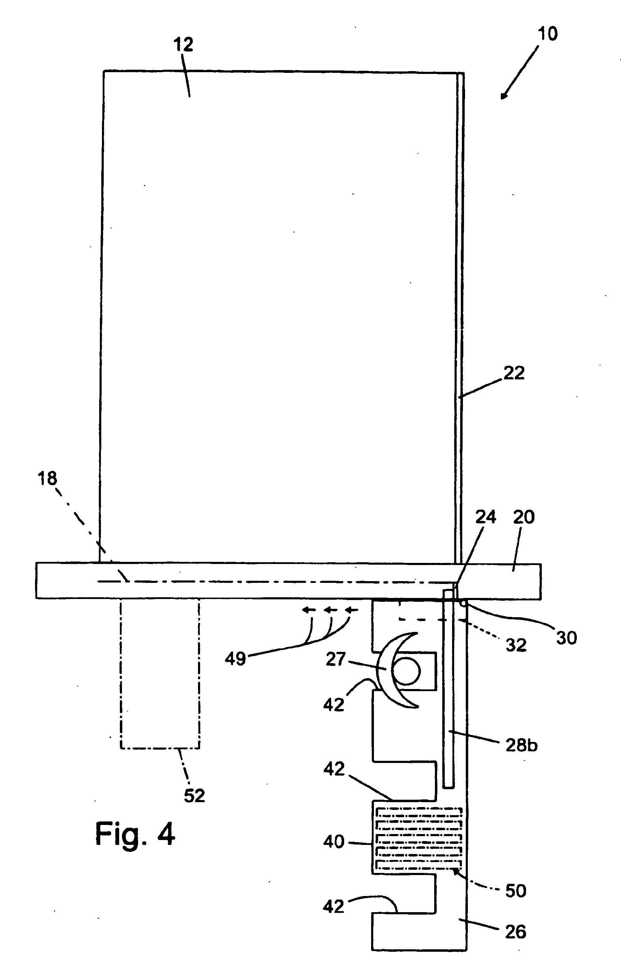

Der Auflagetisch 26 ist an seinem in Figur 1 linken oberen Eck mittels eines Gelenks 30, welches eine senkrecht zur Zeichnungsebene stehende Gelenkachse bildet, schwenkbar an einem Fahrwagen 32 befestigt. Gelenk und Gelenkachse werden nachfolgend mit den gleichen Bezugszeichen bezeichnet. Der Fahrwagen 32 ist wiederum mittels einer Linearführung 34 am Maschinenträger 20 (oder, bei einer nicht gezeigten Ausführungsform, freistehend mit einem Stahlbau) in dessen Längsrichtung verschieblich geführt. Mittels einer nicht gezeigten Betätigungseinrichtung oder auch manuell kann der Auflagetisch 26 um die Gelenkachse 30 von einer in Figur 1 gezeigten Längsstellung, in der der Auflagetisch 26 insgesamt parallel zum Maschinentisch 20 angeordnet ist, in eine Querstellung verschwenkt werden, die in den Figuren 3 und 4 gezeigt ist und in der der Auflagetisch 26 insgesamt orthogonal zum Maschinenträger 20 angeordnet ist.

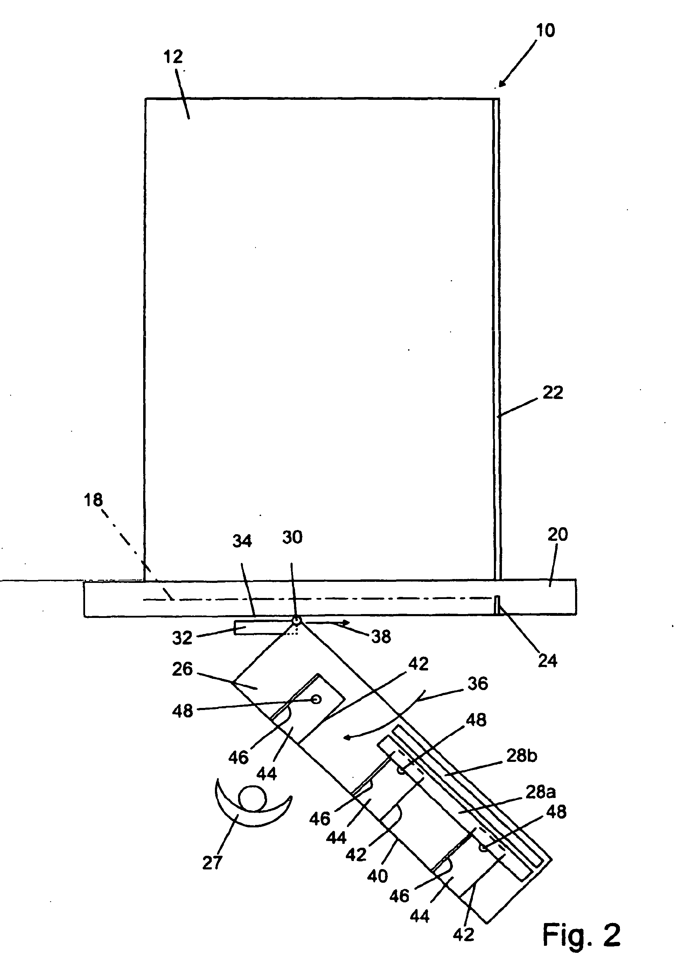

Die Schwenkbewegung ist in Figur 2 dargestellt und durch einen Pfeil 36 verdeutlicht. Man erkennt aus Figur 1, dass in der dort gezeigten Längsstellung des Auflagetisches 26 die Schwenkachse 30 an dessen vom Führungsbereich bzw. Winkellineal 22, 24 entfernt angeordneten Ende liegt.

Durch die in Figur 2 ebenfalls durch einen Pfeil 38 angedeutete Verfahrbarkeit des Fahrwagens 32 kann die Schwenkachse 30 parallel zum Maschinenträger 20 so verfahren werden, dass der Auflagetisch 26 mit einem in seiner Längsstellung (vgl. Figur 1) vom Maschinenträger 20 entfernten Längsrand 40 in der in Figur 3 gezeigten Querstellung des Auflagetisches 26 wenigstens in etwa in Verlängerung der beiden Winkellineale 22 und 24 liegt.

Wie aus den Figuren ersichtlich ist, umfasst der Auflagetisch 26 im Bereich seines in Längsstellung (vgl. Figur 1) vom Maschinenträger 20 entfernt liegenden Längsrand 40 eine Mehrzahl von Nischen 42, die so breit sind, dass sie von der Bedienperson 27 begangen werden können. Die Nischen 42 erstrecken sich bis weit über die Hälfte der Tiefe des Auflagetisches 26 hinweg, so dass die Bedienperson 27 auch dann, wenn der Auflagetisch 26 in der in Figur 1 dargestellten Längsstellung ist, bis nahe an den Maschinenträger 20 bzw. die Sägelinie 18 herantreten kann.

Wie insbesondere aus den Figuren 2 und 3 ersichtlich ist, sind bei dem Auflagetisch 26 Verschlusselemente 44 vorgesehen, welche vorliegend die Form einer rechteckigen Platte haben und über ein Scharnier 46 (vgl. Figur 2) schwenkbar mit dem Rest des Auflagetisches 26 verbunden sind. Denkbar sind aber auch anders geformte, beispielsweise trapezförmige Verschlusselemente. Auf diese Weise können die Verschlusselemente 44 von einer horizontalen Verschlussposition, wie in den Figuren 2 und 3 dargestellt, in eine vertikale Freigabeposition (vgl. Figuren 1 und 4) nach unten verschwenkt werden, in der die Nischen 42 dann für die Bedienperson 27 zugänglich sind. Eine Sicherheitseinrichtung, beispielsweise ein Sensor 48, sperrt das Verschlusselement 44 in der in den Figuren 2 und 3 gezeigten horizontalen Verschlussposition, wenn sich ein Werkstück, in Figur 2 beispielsweise das Werkstück 28a, oberhalb einer Nische 42 befindet. Außerdem wirkt ein Sicherungselement, beispielsweise eine Schaltleiste, eine Lichtschranke oder ein sonstiger Sensor auf die nicht gezeigte Vorschubvorrichtung, um die Bedienperson zu schützen.

Die Plattenaufteilsäge 10 arbeitet folgendermaßen: In der Ausgangsstellung, die in Figur 1 gezeigt ist, befindet sich der Auflagetisch 26 in seiner Längsstellung. Die vom Stapel 14 abgesägten Werkstücke 28a und 28b kommen auf dem Auflagetisch 26 zu liegen. Die Nischen 42 sind für die Bedienperson 27 begehbar, da die Verschlusselemente 44 nach unten geklappt sind.

Wenn die Werkstücke 28a und 28b abgelängt werden sollen, wird der Auflagetisch 26, wie in Figur 2 gezeigt, um 90° im Uhrzeigersinn um die Schwenkachse 30 verschwenkt (Pfeil 36 in Figur 2). Gleichzeitig wird der Fahrwagen 32 von seiner äußersten linken Position nach rechts in Richtung des Pfeiles 38 verfahren. Hierzu dient beispielsweise eine entsprechende Zahnstange, die mit einem von einem Motor angetriebenen Ritzel zusammenarbeitet. Der Auflagetisch 26 kann in der in Figur 1 dargestellten Längsstellung verriegelt sein, diese Verriegelung muss für die in Figur 2 gezeigte Schwenk- und Verfahrbewegung gelöst werden. Am Ende des kombinierten Schwenk- und Verfahrvorganges befindet sich der Auflagetisch 26 in der in Figur 3 gezeigten Querstellung, in der er erforderlichenfalls wiederum verriegelt werden kann. Während des Schwenkvorganges oder vor diesem klappen die Verschlusselemente 44 nach oben, so dass die Nischen 42 verschlossen sind. Dieser Klappvorgang kann automatisch ablaufen, oder die Bedienperson klappt die Verschlusselemente von Hand nach oben.

Wie aus Figur 3 ersichtlich ist, kann die Bedienperson 27 nun das zuvor als erstes abgetrennte Werkstück 28a auch als erstes der Sägelinie 18 zuführen, indem es an das Winkellineal 24 angelegt und entgegen der Zuführrichtung 16 bewegt wird. Dabei sei an dieser Stelle darauf hingewiesen, dass beim Schwenken und gleichzeitigen Verfahren der Auflagetisch 26 derart positioniert wird, dass die von der Bedienperson 27 abgewandte Kante des ersten Werkstücks 28a in Verlängerung zu den Winkellinealen 22 und 24 zum Liegen kommt und somit sofort der Sägelinie 18 entgegen der Zuführrichtung 16 zugeführt werden kann. Somit ist ein Bewegen und Positionieren des Werkstücks 28a parallel zur Sägelinie 18 nicht erforderlich.

Um auch das von der Bedienperson 27 aus gesehen weiter hinten liegende Werkstück 28b ablängen zu können, fährt nun der Auflagetisch 26 in Richtung des Pfeils 49 in Figur 4, bis das Werkstück 28b im Bereich des zweiten Winkellineals 24 liegt. Außerdem werden die Verschlusselemente 44 nach unten geklappt, so dass die Bedienperson 27 nun in eine der Nischen 42 eintreten und das Werkstück 28b der Sägelinie 18 zuführen kann, ohne es parallel zur Sägelinie 18 bewegen zu müssen.

Bei einer Vielzahl von auf dem Auflagetisch 26 liegenden Werkstücken kann der Auflagetisch 26 "getaktet" bewegt werden, was durch die Mehrzahl von Pfeilen 49 in Figur 4 angedeutet ist. Ferner kann der Auflagetisch 26 auch mit einer Transporteinrichtung versehen sein, mit der bei in Querstellung befindlichem Auflagetisch 26 ein auf dem Auflagetisch 26 liegendes Werkstück 28a, 28b quer zur Zuführrichtung 16 bewegt werden kann. In Figur 4 ist eine solche Transporteinrichtung in Form einer Mehrzahl von Bändern 50 in einem Bereich des Auflagetisches 26 durch strichpunktierte Linien angedeutet. Alternativ sind auch angetriebene Rollen als Transporteinrichtung denkbar oder Ketten, Spindeln, Klinken oder Schieber.

Ferner kann die Plattenbearbeitungsanlage 10 auch einen zusätzlichen Auflagetisch umfassen, der in Figur 4 strichpunktiert angedeutet und mit dem Bezugszeichen 52 versehen ist. Dieser zusätzliche Auflagetisch 52 kann ebenfalls parallel zum Maschinenträger 20 bewegt werden.

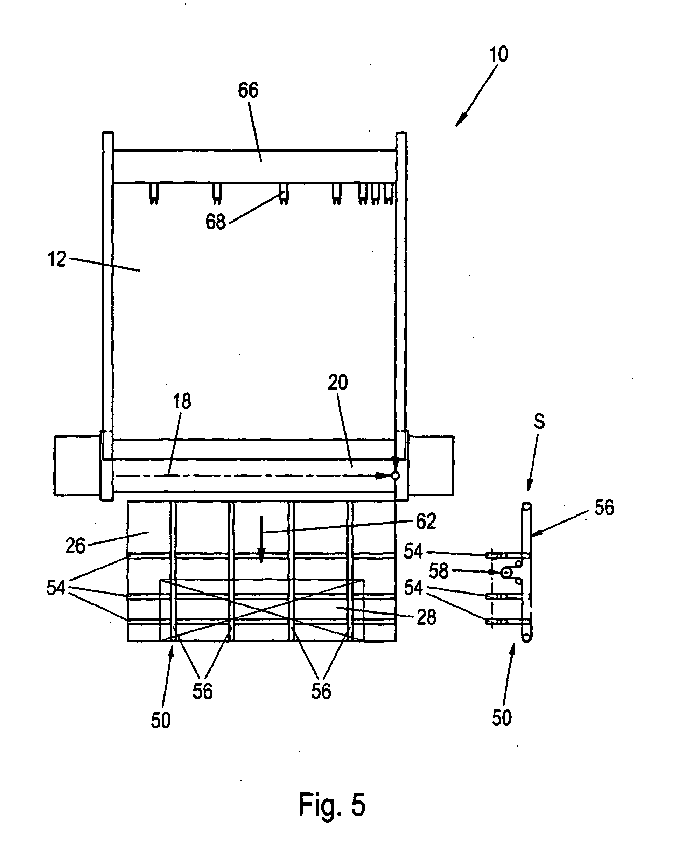

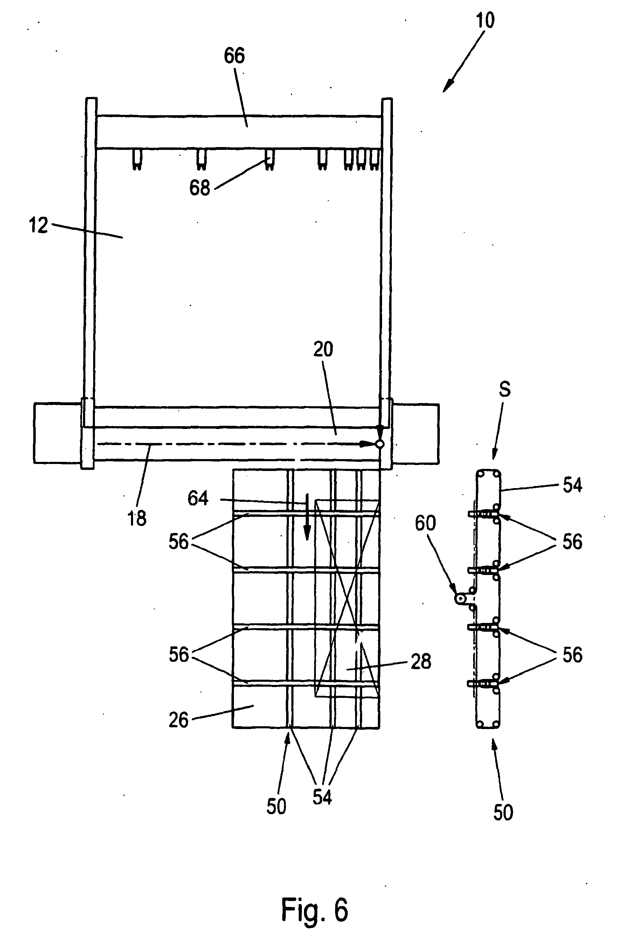

Figur 5 und 6 zeigen eine zweite Ausführungsform der Plattenbearbeitungsanlage 10. Zur ersten Ausführungsform funktionsäquivalente Bauteile sind mit den gleichen Bezugszeichen gekennzeichnet und werden nicht noch einmal erläutert. Der Unterschied der zweiten Ausführungsform zur ersten Ausführungsform bezieht sich ausschließlich auf die Ausgestaltung des Auflagetisches 26. Alle zur ersten Ausführungsform beschriebenen Merkmale und Arbeitsverfahren sind mit der zweiten Ausführungsform kombinierbar.

Figur 5 zeigt die Plattenbearbeitungsanlage 10 mit einem Auflagetisch 26 in Längsstellung. Die Transporteinrichtung 50 des Auflagetisches 26 umfasst in dieser Stellung drei längs zur Sägelinie 18 verlaufende erste Förderriemen 54. Die Förderriemen 54 verlaufen im Bereich der Oberfläche des Auflagetisches 26 und sind derart angeordnet, dass sich der Abstand der Förderriemen 54 zueinander verringert, je weiter der Förderreimen 54 von der Sägelinie entfernt ist. Orthogonal zu den ersten Förderriemen 54 umfasst die Transporteinrichtung 50 des Auflagetisches 26 in dieser Stellung ferner vier quer zur Sägelinie 18 zweite Förderriemen 56. Die Förderriemen 56 sind über den gesamten Auflagetisch 26 gleichmäßig verteilt. Die Anzahl und die Anordnung der längs und quer verlaufenden Förderriemen 54 und 56 kann natürlich in weiteren Ausführungsformen variieren.

Figur 6 zeigt die Plattenbearbeitungsanlage 10 mit quergestelltem Auflagetisch 26. Die Anordnung der Förderriemen 54 und 56 ist natürlich identisch zu Figur 5.

Zur Erläuterung der Funktionsweise ist in Figur 5 ein Verlauf der ersten und zweiten Förderriemen 54 und 56 bei der Längsstellung des Auflagetisches 26 in einer Seitenansicht S dargestellt; Figur 6 zeigt in einer Seitenansicht S den Verlauf der ersten und zweiten Förderriemen 54 und 56 in einer Querstellung des Auflagetisches 26. Zur besseren Verdeutlichung ist in der Seitenansicht S von Figur 5 zusätzlich ein Antrieb 58 der zweiten Förderriemen 56 und in der Seitenansicht S der Figur 6 zusätzlich ein Antrieb 60 der ersten Förderriemen 54 dargestellt. In der hier dargestellten Ausführungsform sind die Umlenkrollen (ohne Beezugszeichen) und der Antrieb 60 der drei ersten Förderriemen 54 vertikal starr.

Um das Kreuzen der ersten Förderriemen 54 und der zweiten Förderriemen 56 zu ermöglichen, werden die ersten Förderriemen 54 im Kreuzungsbereich mit den zweiten Förderriemen 56 über Umlenkrollen in der Art eines U nach unten umgeleitet, so dass im Freiraum zwischen den Schenkeln des U die zweiten Förderriemen 56 verlaufen können. Die zweiten Förderriemen 56 und sind derart höhenverstellbar, dass sie in einer ersten vertikalen Position oberhalb einer Transportebene der ersten Förderriemen 54 liegen, in einer zweiten vertikalen Position unterhalb dieser Transportebene. In der ersten vertikalen Position der zweiten Förderriemen 56 liegt das Werkstück 28 demnach auf den zweiten Förderriemen 56, in der zweiten vertikalen Position der zweiten Förderriemen 56 dagegen auf den ersten Förderriemen 54.

Die Transporteinrichtung 50 mit den Förderriemen 54 und 56 des Auflagetisches 26 arbeitet folgendermaßen:

Bei einer Querförderung (siehe Bezugszeichen 62 in Figur 5), vorzugsweise in einer Längsstellung des Auflagetisches 26, werden die Förderriemen 56 in die erste vertikale Position angehoben, so dass die Förderriemen 56 die Förderriemen 54 überragen. Das Werkstück 28 liegt damit lediglich auf den Förderriemen 56 auf und wird dabei in oder, wenn erforderlich, entgegen der Querrichtung 62 transportiert.

Bei einer Längsförderung (siehe Bezugszeichen 64 in Figur 6), vorzugsweise in einer Querstellung des Auflagetisches 26, werden die Förderriemen 56 abgesenkt. Das Werkstück 28 liegt damit lediglich auf den Förderriemen 54 auf und wird dabei in oder, wenn gewünscht, entgegen der Längsrichtung 64 transportiert.

Auf diese Weise kann das Werkstück 28 von der Transporteinrichtung 50 wieder zurück auf den Zuführtisch 12 transportiert und beispielsweise einem Programmschieber 66 bzw. dessen Spannzangen 68 zugeführt werden, ohne dass die Bedienperson hierfür Kraft aufwenden muss.

In einer weiteren, nicht dargestellten Ausführungsform können auch die Querriemen in einer nicht veränderbaren Lage verlaufen und die Längsriemen sind höhenverstellbar.

## Patentansprüche

1. Plattenbearbeitungsanlage (10) für großformatige Platten oder Plattenstapel, insbesondere Plattenaufteilsäge, mit einer quer zu einer Zuführrichtung (16) angeordneten Sägelinie (18), mit einem parallel zur Zuführrichtung (16) angeordneten Führungsbereich (22, 24) für mindestens ein Werkstück (14, 28; 28a, 28b), und mit einem Auflagetisch (26), der von einer zur Sägelinie (18) insgesamt in etwa parallelen Längsstellung in eine zur Sägelinie (18) insgesamt in etwa orthogonale Querstellung und zurück schwenkbar ist (36), wobei die Schwenkachse (30) in der Längsstellung des Auflagetisches (26) an dessen vom Führungsbereich (22, 24) entfernt angeordnetem Ende liegt, **dadurch gekennzeichnet, dass** die Schwenkachse (30) bei einem Verschwenken von der Längs- in die Querstellung parallel zur Sägelinie (18) zumindest anfänglich in Richtung Führungsbereich (22, 24) so verfahren werden kann (38), dass der Auflagetisch (26) mit einem beliebigen gewünschten Längsbereich, vorzugsweise einem in seiner Längsstellung von der Sägelinie (18) entfernten Längsrand (40) oder einem zu diesem benachbarten Bereich, in der Querstellung des Auflagetisches (26) in Verlängerung des Führungsbereiches (22, 24) liegt.

2. Plattenbearbeitungsanlage nach Anspruch 1, **dadurch gekennzeichnet, dass** die Schwenk- und die Verfahrbewegung gleichzeitig ausführbar sind.

3. Plattenbearbeitungsanlage (10) nach einem der Ansprüche 1 oder 2, **dadurch gekennzeichnet, dass** der Auflagetisch (26) in seiner Querstellung zur Positionierung des Werkstücks (28; 28b) relativ zum Führungsbereich (22, 24) verfahren werden kann.

4. Plattenbearbeitungsanlage (10) nach einem der vorhergehenden Ansprüche, **dadurch gekennzeichnet, dass** der Auflagetisch (26) eine Transporteinrichtung (50) umfasst, die Mittel (56) umfasst, mit denen ein auf dem Auflagetisch (26) liegendes Werkstück (28; 28a, 28b) quer zur Zuführrichtung (16) bewegt werden kann.

5. Plattenbearbeitungsanlage (10) nach einem der vorhergehenden Ansprüche, **dadurch gekennzeichnet, dass** der in Längsstellung des Auflagetisches (26) von der Sägelinie (18) entfernt liegende Längsrand (40) des Auflagetisches (26) mindestens zeitweise mindestens eine von einer Bedienperson (27) begehbare Nische (42) umfasst.

6. Plattenbearbeitungsanlage (10) nach Anspruch 5, **dadurch gekennzeichnet, dass** der Auflagetisch (26) mindestens ein Verschlusselement (44) umfasst, welches die Nische (42) nach oben hin verschließen kann.

7. Plattenbearbeitungsanlage (10) nach Anspruch 6, **dadurch gekennzeichnet, dass** das Verschlusselement (44) von einer horizontalen Verschlussposition in eine vertikale Freigabeposition verschwenkbar ist (46).

8. Plattenbearbeitungsanlage (10) nach einem der Ansprüche 6 oder 7, **dadurch gekennzeichnet, dass** sie eine Sicherheitseinrichtung (48) umfasst, welche das Verschlusselement (44) in der Verschlussposition sperrt, wenn sich ein Werkstück (28b) oberhalb der Nische (42) befindet.

9. Plattenbearbeitungsanlage (10) nach einem der vorhergehenden Ansprüche, **dadurch gekennzeichnet, dass** der Auflagetisch als Luftkissentisch (26) ausgebildet ist.

10. Plattenbearbeitungsanlage (10) nach einem der vorhergehenden Ansprüche, **dadurch gekennzeichnet, dass** die Schwenkachse (30) an einem Fahrwagen (32) angeordnet ist, der mittels mindestens einer Linearführung (34) an einem parallel zur Sägelinie (18) verlaufenden Maschinenträger (20) geführt ist.

11. Plattenbearbeitungsanlage (10) nach einem der vorhergehenden Ansprüche, **dadurch gekennzeichnet, dass** sie eine Verriegelungseinrichtung umfasst, die den Auflagetisch (26) in der Längsstellung und/oder der Querstellung verriegelt.

12. Plattenbearbeitungsanlage (10) nach einem der vorhergehenden Ansprüche, **dadurch gekennzeichnet, dass** sie mindestens einen zusätzlichen Auflagetisch (52) umfasst, der parallel zur Sägelinie (18) bewegbar ist.

13. Plattenbearbeitungsanlage (10) nach einem der vorhergehenden Ansprüche, **dadurch gekennzeichnet, dass** der Auflagetisch (26) eine Transporteinrichtung (50) umfasst, die Mittel (54) umfasst, mit denen ein auf dem Auflagetisch (26) liegendes Werkstück (28; 28a, 28b) parallel zur Zuführrichtung (16) bewegt werden kann.

14. Plattenbearbeitungsanlage (10) nach einem der Ansprüche 4 oder 13, **dadurch gekennzeichnet, dass** die Mittel eine Mehrzahl von Förderriemen (54; 56) umfassen, wobei ein Teil (54) der Förderriemen orthogonal zu den übrigen Förderriemen (56) verläuft.

15. Plattenbearbeitungsanlage (10) nach den Ansprüchen 4 sowie 13 oder 14, **dadurch gekennzeichnet, dass** die Mittel (56), mit denen ein auf dem Auflagetisch (26) liegendes Werkstück (28; 28a, 28b) quer zur Zuführrichtung (16) bewegt werden kann, und/oder die Mittel (56), mit denen ein auf dem Auflagetisch (26) liegendes Werkstück (28; 28a, 28b) längs zur Zuführrichtung (16) bewegt werden kann, höhenverstellbar sind.

16. Verfahren zum Betreiben einer Plattenbearbeitungsanlage (10) nach einem der vorhergehenden Ansprüche, **dadurch gekennzeichnet, dass** die Schwenkachse (30) des Auflagetisches (26) bei einem Verschwenken von der Längsin die Querstellung parallel zur Sägelinie (18) zumindest anfänglich in Richtung Führungsbereich (22, 24) so verfahren wird, dass unmittelbar danach ein Rand mindestens eines ersten auf dem Auflagetisch (26) im Bereich des in Längsstellung von der Sägelinie (18) entfernten Längsrands (40) liegenden Werkstücks (28; 28a) so in Verlängerung des Führungsbereichs (22, 24) liegt, dass das Werkstück (28; 28a) sofort in Anlage am Führungsbereich (22, 24) zur Sägelinie (18) hin bewegt werden kann.

17. Verfahren nach-Anspruch 16, **dadurch gekennzeichnet, dass** der Auflagetisch (26) gleichzeitig verschwenkt und verfahren wird.

18. Verfahren nach einem der Ansprüche 16 oder 17, **dadurch gekennzeichnet, dass** nach der Verarbeitung des ersten Werkstücks (28a) mindestens ein zweites auf dem Auflagetisch (26) liegendes Werkstück (28b) mittels einer Transporteinrichtung (50) und/oder durch ein Verfahren des Auflagetisches (26) so positioniert wird, dass sein Rand so in Verlängerung des Führungsbereichs (22, 24) liegt, dass das zweite Werkstück (28b) sofort in Anlage am Führungsbereich (22, 24) zur Sägelinie (18) hin bewegt werden kann.

19. Verfahren nach einem der Ansprüche 16 bis 18, **dadurch gekennzeichnet, dass** das auf dem Auflagetisch (26) liegende Werkstück (28; 28a, 28b) durch eine Transporteinrichtung (50), insbesondere Förderriemen (54; 56) quer und/oder längs zur Sägelinie (18) transportiert wird.

20. Steuer- und/oder Regeleinrichtung (52) für eine Plattenbearbeitungsanlage (10) nach einem der Ansprüche 1 bis 15, **dadurch gekennzeichnet, dass** sie zur Ausführung eines Verfahrens nach einem der Ansprüche 16 bis 19 programmiert ist.

## Claims

1. A board processing device (10) for large-scale boards or stacks of boards, in particular a board dividing saw, having a saw line (18) that is disposed so as to be transverse to a feed direction (16), having a guide area (22, 24), which is arranged parallel to the feed direction (16), for at least one work piece (14, 28; 28a, 28b), and having a supporting table (26), which can be pivoted (36) back and forth from a longitudinal position that is roughly parallel to the saw line (18) to a transverse position that is roughly orthogonal to the saw line (18), whereby in the longitudinal position of the supporting table (26) the pivot axis (30) is located at the end of the table that is distant from the guide area (22, 24), wherein, when pivoting from the longitudinal to the transverse position, the pivot axis (30) at least initially may be displaced in the direction of the guide area (22, 24) in such a way that at any desired longitudinal area, preferably at a longitudinal edge (40) that in the longitudinal position is distant from the saw line (18), or at an area adjoining thereto, the supporting table (26) is located as an extension of the guide area (22, 24) in the transverse position of the supporting table (26).

2. The board processing device in accordance with Claim 1, wherein the pivot and the displacement motions may be executed simultaneously.

3. The board processing device (10) as recited in any of Claims 1 or 2, wherein the supporting table (26) in its transverse position may be displaced relative to the guide area (22, 24) in order to position the work piece (28; 28b).

4. The board processing device (10) as recited in any of the preceding claims, wherein the supporting table (26) includes a conveying device (50), which includes a means (56) which can cause a work piece (28; 28a, 28b) on the supporting table (26) to move transverse to the feed direction (16).

5. The board processing device (10) as recited in any of the preceding claims, wherein the longitudinal edge (40) of the supporting table (26) that is distant from the saw line (18) in the longitudinal position of the supporting table (26) includes at least one niche (42) that is accessible to an operator (27) at least part of the time.

6. The board processing device (10) as recited in Claim 5, wherein the supporting table (26) includes at least one closure element (44), which can close the niche (42) from above.

7. The board processing device (10) as recited in Claim 6, wherein the closure element (44) may be pivoted (46) from a horizontal closure position to a vertical release position.

8. The board processing device (10) as recited in any of Claims 6 or 7, wherein it includes a safety device (48), which locks the closure element (44) in the closure position if a work piece (28b) is situated above the niche (42).

9. The board processing device (10) as recited in any of the preceding claims, wherein the supporting table is configured as an air-cushion table (26).

10. The board processing device (10) as recited in any of the preceding claims, wherein the pivot axis (30) is arranged on a carriage (32), which is guided by at least one linear guide device (34) in the direction of a machine support (20) that runs parallel to the saw line (18).

11. The board processing device (10) as recited in any of the preceding claims, wherein it includes a locking device, which locks the supporting table (26) in the longitudinal position and/or the transverse position.

12. The board processing device (10) as recited in any of the preceding claims, wherein it includes at least one additional supporting table (52), which can be moved parallel to the saw line (18).

13. The board processing device (10) as recited in any of the preceding claims, wherein the supporting table (26) includes a conveying device (50), which includes a means (54), which can cause a work piece (28; 28a, 28b) on the supporting table (26) to move parallel to the feed direction (16).

14. The board processing device (10) as recited in any of Claims 4 or 13, wherein the means include a multiplicity of conveyor belts (54; 56), whereby a portion (54) of the conveyor belts runs orthogonal to the other conveyor belts (56).

15. The board processing device (10) as recited in Claims 4 and 13 or 14, wherein the means (56) which can cause a work piece (28; 28a, 28b) on the supporting table (26) to move transverse to the feed direction (16) and/or the means (56) which can cause a work piece (28; 28a, 28b) on the supporting table (26) to move longitudinal to the feed direction (16) may be adjusted with respect to height.

16. A method for operating a board processing device (10) as recited in any of the preceding claims, wherein the pivot axis (30) of the supporting table (26) in response to pivoting parallel to the saw line (18) from the longitudinal to the transverse position is displaced at least initially in the direction of the guide area (22, 24) in such a way that immediately thereafter an edge of at least a first work piece (28; 28a) on the supporting table (26) in the area of the longitudinal edge (40) that is distant from the saw line (18) in the longitudinal position is situated in extension of the guide area (22, 24) such that the work piece (28; 28a) may be immediately moved towards the saw line (18) in contact with the guide area (22, 24).

17. The method as recited in Claim 16, wherein the supporting table (26) is simultaneously pivoted and displaced.

18. The method as recited in any of Claims 16 or 17, wherein after the processing of the first work piece (28a) at least one second work piece (28b) on the supporting table (26) is positioned by a conveying device (50) and/or by a displacement of the supporting table (26) in such a way that its edge is situated in extension of the guide area (22, 24) such that the second work piece (28b) may be immediately moved towards the saw line (18) in contact with the guide area (22, 24).

19. The method as recited in any of Claims 16 to 18, wherein the work piece (28; 28a, 28b) on the supporting table (26) is transported by a conveying device (50), in particular conveyor belts (54; 56), transverse to and/or along the saw line (18).

20. A control and/or regulating device (52) for a board processing device (10) as recited in any of Claims 1 to 15, wherein it is programmed to carry out a method as recited in any of Claims 16 to 19.

## Revendications

1. Installation de traitement de panneaux (10) pour des panneaux de grand format ou des piles de panneaux de grand format, en particulier scie de découpe de panneaux, avec une ligne de sciage (18), disposée transversalement à une direction d'acheminement (16), avec une zone de guidage (22, 24) disposée parallèlement à la direction d'acheminement (16), pour au moins une pièce à traiter (14, 28; 28a, 28b), et avec une table de réception (26), qui est apte à pivoter (36) depuis une position longitudinale, dans l'ensemble sensiblement parallèle à la ligne de sciage (18), vers une position transversale, dans l'ensemble sensiblement orthogonale à la ligne de sciage (18), et inversement, l'axe de pivotement (30) étant situé, dans la position longitudinale de la table de réception (26), au niveau de l'extrémité de celle-ci éloignée de la zone de guidage (22, 24), **caractérisée en ce que** l'axe de pivotement (30), lors d'un pivotement de la position longitudinale vers la position transversale, peut se déplacer (38) parallèlement à la ligne de sciage (18), au moins au début, vers la zone de guidage (22, 24), de telle sorte que la table de réception (26), avec une zone longitudinale quelconque souhaitée, de préférence un bord longitudinal (40), éloigné de la ligne de sciage (18) dans sa position longitudinale, ou une zone au voisinage dudit bord se situe, dans la position transversale de la table de réception (26), dans le prolongement de la zone de guidage (22, 24).

2. Installation de traitement de panneaux selon la revendication 1, **caractérisée en ce que** le mouvement de pivotement et le mouvement de déplacement peuvent être exécutés simultanément.

3. Installation de traitement de panneaux (10) selon la revendication 1 ou 2, **caractérisée en ce que** la table de réception (26), dans sa position transversale pour le positionnement de la pièce à traiter (28; 28b), peut effectuer un mouvement relatif par rapport à la zone de guidage (22, 24).

4. Installation de traitement de panneaux (10) selon l'une quelconque des revendications précédentes, **caractérisée en ce que** la table de réception (26) comporte un dispositif de transport (50), qui est équipé de moyens (56), par lesquels une pièce à traiter (28; 28a, 28b), posée sur la table de réception (26), peut être déplacée transversalement à la direction d'acheminement (16).

5. Installation de traitement de panneaux (10) selon l'une quelconque des revendications précédentes, **caractérisée en ce que** le bord longitudinal (40) de la table de réception (26), éloigné de la ligne de sciage (18) dans la position longitudinale de la table de réception (26), comporte au moins temporairement au moins une niche (42), accessible par une personne de service (27).

6. Installation de traitement de panneaux (10) selon la revendication 5, **caractérisée en ce que** la table de réception (26) comporte au moins un élément d'obturation (44), qui peut fermer la niche (42) vers le haut.

7. Installation de traitement de panneaux (10) selon la revendication 6, **caractérisée en ce que** l'élément d'obturation (44) est apte à pivoter (46) depuis une position de fermeture horizontale vers une position de déblocage verticale.

8. Installation de traitement de panneaux (10) selon la revendication 6 ou 7, **caractérisée en ce qu'**elle comporte un dispositif de sécurité (48), qui bloque l'élément d'obturation (44) dans la position de fermeture lorsqu'une pièce à traiter (28b) se situe au-dessus de la niche (42).

9. Installation de traitement de panneaux (10) selon l'une quelconque des revendications précédentes, **caractérisée en ce que** la table de réception est réalisée sous la forme d'une table à matelas d'air (26).

10. Installation de traitement de panneaux (10) selon l'une quelconque des revendications précédentes, **caractérisée en ce que** l'axe de pivotement (30) est disposé sur un chariot (32), qui est guidé à l'aide d'au moins un guidage linéaire (34) sur un porte-machine (20) qui s'étend parallèlement à la ligne de sciage (18).

11. Installation de traitement de panneaux (10) selon l'une quelconque des revendications précédentes, **caractérisée en ce qu'**elle comporte un dispositif de verrouillage, qui bloque la table de réception (26) dans la position longitudinale et/ou dans la position transversale.

12. Installation de traitement de panneaux (10) selon l'une quelconque des revendications précédentes, **caractérisée en ce qu'**elle comporte au moins une table de réception (52) supplémentaire, qui est mobile parallèlement à la ligne de sciage (18).

13. Installation de traitement de panneaux (10) selon l'une quelconque des revendications précédentes, **caractérisée en ce que** la table de réception (26) comporte un dispositif de transport (50) qui est équipé de moyens (54), par lesquels une pièce à traiter (28; 28a, 28b), posée sur la table de réception (26), peut être déplacée parallèlement à la direction d'acheminement (16).

14. Installation de traitement de panneaux (10) selon la revendication 4 ou 13, **caractérisée en ce que** les moyens comportent une pluralité de courroies de transport (54; 56), une partie (54) des courroies de transport étant orientée orthogonalement au reste des courroies de transport (56).

15. Installation de traitement de panneaux (10) selon les revendications 4 et 13 ou 14, **caractérisée en ce que** les moyens (56), par lesquels une pièce à traiter (28; 28a, 28b), posée sur la table de réception (26), peut être déplacée transversalement à la direction d'acheminement (16), et/ou les moyens (54), par lesquels une pièce à traiter (28; 28a, 28b), posée sur la table de réception (26), peut être déplacée parallèlement à la direction d'acheminement (16), sont réglables en hauteur.

16. Procédé pour l'exploitation d'une installation de traitement de panneaux (10) selon l'une des revendications précédentes, **caractérisé en ce que** l'axe de pivotement (30) de la table de réception (26), lors d'un pivotement de la position longitudinale vers la position transversale, peut se déplacer (38) parallèlement à la ligne de sciage (18), au moins au début, vers la zone de guidage (22, 24), de telle-sorte que, immédiatement après, un bord d'au moins une première pièce à traiter (28; 28a), posée sur la table de réception (26) dans la zone du bord longitudinal (40), éloigné de la ligne de sciage (18) dans la position longitudinale, est situé dans le prolongement de la zone de guidage (22, 24), de telle sorte que la pièce à traiter (28; 28a) peut être déplacée immédiatement en appui contre la zone de guidage (22, 24) vers la ligne de sciage (18).

17. Procédé selon la revendication 16, **caractérisé en ce que** la table de réception (26) peut pivoter et se déplacer simultanément.

18. Procédé selon la revendication 16 ou 17, **caractérisé en ce que**, après le traitement de la première pièce (28a), au moins une deuxième pièce (28b), posée sur la table de réception (26), est positionnée au moyen d'un dispositif de transport (50) et/ou par un déplacement de la table de réception (26), de telle sorte que son bord est situé dans le prolongement de la zone de guidage (22, 24), de telle sorte que la deuxième pièce à traiter (28b) peut être déplacée immédiatement en appui contre la zone de guidage (22, 24) vers la ligne de sciage (18).

19. Procédé selon l'une quelconque des revendications 16 à 18, **caractérisé en ce que** la pièce à traiter (28; 28a, 28b), posée sur la table de réception (26), est transportée par un dispositif de transport (50), en particulier des courroies de transport (54; 56), transversalement et/ou longitudinalement à la ligne de sciage (18).

20. Dispositif de commande et/ou de réglage (52) pour une installation de traitement de panneaux (10) selon l'une des revendications 1 à 15, **caractérisé en ce que** ledit dispositif est programmé pour la mise en oeuvre d'un procédé selon l'une des revendications 16 à 19.
